# FASCICULE DE BREVET EUROPEEN

(11) **EP 1 480 732 B1**
(45) Date de publication et mention de la délivrance du brevet: **07.04.2010**
(21) Numéro de dépôt: 03742589.9
(22) Date de dépôt: 07.02.2003
(51) Int. Cl.: B01D 53/047, C01B 3/56

(54) **PROCEDE DE PRODUCTION D'HYDROGENE A PARTIR D'UN GAZ DE CHARGE RICHE EN HYDROGENE**
VERFAHREN ZUR HERSTELLUNG VON WASSERSTOFF AUS EINEM WASSERSTOFFREICHEN SPEISEGAS
METHOD FOR THE PRODUCTION OF HYDROGEN FROM A HYDROGEN-RICH FEED GAS

(30) Priorité: 15.02.2002 FR 0201914
(43) Date de publication de la demande: 01.12.2004
(60) Demande divisionnaire: 09162112.8
(73) Titulaire: L'AIR LIQUIDE, Société Anonyme pour l'Etude et l'Exploitation des Procédés Georges Claude, 75007 Paris (FR)
(72) Inventeur: DE SOUZA, Guillaume, F-92130 Issy les Moulineaux (FR)
(74) Mandataire: Ducreux, Marie
(86) Numéro de dépôt international: PCT/FR2003/000400
(87) Numéro de publication internationale: WO 2003/070358

(56) Documents cités:
- EP-A- 0 394 947
- US-A- 5 254 154
- US-B1- 6 315 818

## Description

La présente invention concerne un procédé de production d'hydrogène à partir d'un mélange d'alimentation riche en hydrogène.

Actuellement, la récupération d'hydrogène à partir d'un tel mélange d'alimentation est généralement réalisée au moyen d'une unité de traitement par adsorption de type P.S.A. (« Pressure Swing Adsorption » ou adsorption à modulation de pression). Une telle unité met en oeuvre un procédé dans lequel on utilise au moins un adsorbeur qui suit un cycle où se succèdent une phase d'adsorption sensiblement à une haute pression du cycle, et une phase de régénération comprenant au moins une étape de dépressurisation jusqu'à une basse pression du cycle et une étape de repressurisation jusqu'à la haute pression du cycle.

Dans toute la suite, les pressions sont indiquées en bars absolus.

En fonction de la composition du gaz d'alimentation, une unité P.S.A. classique a pour qualité de produire un flux d'hydrogène sensiblement pur (de teneur en hydrogène supérieure à 95 %) à haute pression, mais présente le défaut d'être limitée en rendement en hydrogène à environ 90 %, même dans le cas d'un mélange d'alimentation très riche en hydrogène (par exemple à teneur comprise entre 90 à 98 % d'hydrogène).

Dans le cas d'un gaz d'alimentation issu d'une unité de reformage à la vapeur, le rendement en hydrogène généralement atteint par une unité P.S.A. est de l'ordre de 90 %. Dépasser un tel rendement nécessite de porter la teneur de l'hydrogène dans les gaz résiduaires évacués de l'unité P.S.A. au-dessous de 20 %, ce qui actuellement ne semble accessible que par l'emploi d'adsorbants sélectifs mieux ajustés au gaz d'alimentation à traiter, et donc coûteux.

Par ailleurs, on connaît par le document EP-A-1 023 934 un procédé de récupération d'hydrogène amélioré qui consiste, au sein d'une unité PSA, à recycler une partie variable de gaz résiduaires issus de l'unité PSA, dans le gaz d'alimentation. Plus précisément, dans ce document, la phase de régénération commence par une première sous-étape de dépressurisation à co-courant par équilibrage total de pression avec un adsorbeur en repressurisation, suivie d'une seconde sous-étape de dépressurisation à co-courant durant laquelle le gaz issu de l'adsorbeur en seconde sous-étape de dépressurisation à co-courant est utilisé comme gaz d'élution du matériau adsorbant d'un autre adsorbeur. Le flux sortant de ce dernier adsorbeur en élution est alors comprimé jusqu'à la haute pression du cycle pour être mélangé au gaz d'alimentation de l'unité PSA.

Un tel aménagement du cycle de fonctionnement d'une unité PSA assure le recyclage d'une partie de résiduaires plus ou moins riches en hydrogène. Cependant, un tel recyclage peut se révéler préjudiciable à la productivité de l'unité PSA.

La présente invention a pour but de proposer un procédé du type décrit ci-dessus, qui améliore la récupération d'hydrogène à partir d'un gaz d'alimentation donné, tout en maintenant constante, voire en améliorant, la productivité de l'unité PSA de mise en oeuvre de ce procédé et/ou en réduisant l'investissement global de cette unité.

A cet effet, l'invention a pour objet un procédé de production d'hydrogène à partir d'un mélange d'alimentation principal riche en hydrogène, dans lequel on utilise N adsorbeurs, avec N supérieur ou égal à un, qui suivent chacun en décalage un cycle où se succèdent une phase d'adsorption sensiblement à une haute pression du cycle et une phase de régénération, laquelle phase de régénération comprend une étape de dépressurisation jusqu'à une pression basse du cycle comportant une sous-étape de dépressurisation à co-courant, une étape d'élution à la basse pression du cycle, et une étape de repressurisation jusqu'à la haute pression du cycle, dans lequel on envoie la totalité du ou des flux sortant du ou des adsorbeurs en dépressurisation à co-courant à l'adsorbeur ou aux adsorbeurs en étape d'élution, et dans lequel on recycle au moins une partie du ou des flux sortant du ou des adsorbeurs en phase de régénération, en comprimant ladite partie recyclée jusqu'à la haute pression du cycle et en alimentant le ou les adsorbeurs en phase d'adsorption par ladite partie recyclée.

Suivant d'autres caractéristiques de ces procédés, prises isolément ou selon toutes les combinaisons techniquement possibles :
- durant la phase d'adsorption, se succèdent une étape de traitement par adsorption, sensiblement à la haute pression du cycle, du mélange d'alimentation principal, et une étape de traitement par adsorption, sensiblement à la même haute pression du cycle, de la partie recyclée comprimée du ou des flux sortant du ou des adsorbeurs en phase de régénération ;
- l'étape de dépressurisation comporte, après la sous-étape de dépressurisation à co-courant, une sous-étape de dépressurisation à contre-courant, et on recycle, au moins en partie, le ou les flux sortant du ou des adsorbeurs en début de sous-étape de dépressurisation à contre-courant ;
- on recycle, au moins en partie, le ou les flux sortant du ou des adsorbeurs en fin d'étape d'élution ;
- on recycle, au moins en partie, le ou les flux sortant du ou des adsorbeurs en dépressurisation à contre-courant pendant le premier tiers de la sous-étape de dépressurisation à contre-courant, et/ou le ou les flux sortant du ou des adsorbeurs en élution pendant les deux derniers tiers de l'étape d'élution ;
- la phase d'adsorption comprend, après l'étape de traitement du mélange d'alimentation, une étape de traitement par adsorption, à la haute pression du cycle, d'au moins un gaz d'alimentation supplémentaire de teneur en hydrogène inférieure à celle dudit mélange d'alimentation, l'étape de traitement dudit gaz supplémentaire étant placée après l'étape de traitement de la partie recyclée du ou des flux sortant du ou des adsorbeurs en phase de régénération lorsque la teneur en hydrogène dudit gaz supplémentaire est inférieure à celle de ladite partie recyclée, ou placée avant l'étape de traitement du second gaz d'alimentation lorsque la teneur en hydrogène dudit gaz supplémentaire est supérieure à celle de ladite partie recyclée ; et
- on mélange, à la partie recyclée du ou des flux sortant du ou des adsorbeurs en phase de régénération, un gaz combustible de teneur en hydrogène inférieure à celle du mélange d'alimentation.

L'invention a également pour objet une unité de production d'hydrogène à partir d'un mélange principal riche en hydrogène, qui comporte N adsorbeurs, avec N supérieur ou égal à un, qui suivent chacun en décalage un cycle où se succèdent une phase d'adsorption sensiblement à une haute pression du cycle, et une phase de régénération, laquelle phase de régénération comprend une étape de dépressurisation jusqu'à une pression basse du cycle, comportant une sous-étape de dépressurisation à co-courant, une étape d'élution à la basse pression du cycle, et une étape de repressurisation jusqu'à la haute pression du cycle, ladite unité étant associée à un réseau de gaz combustible, laquelle unité comporte une ligne de recyclage d'au moins un des flux sortant du ou des adsorbeurs en phase de régénération, pourvue d'un compresseur de recycle, et une dérivation adaptée pour envoyer une partie du gaz combustible du réseau de gaz combustible à ladite ligne de recyclage.

L'invention sera mieux comprise à la lecture de la description qui va suivre, donnée uniquement à titre d'exemple et faite en se référant aux dessins sur lesquels :
- la figure 1 est une vue schématique d'une unité PSA ;
- la figure 3 est un tableau de données correspondant aux performances d'unités de production d'hydrogène selon l'art antérieur et selon l'invention ;
- la figure 5 est un diagramme illustrant l'influence d'un paramètre du cycle de la figure 4 sur la consommation énergétique et la productivité d'une unité PSA de mise en oeuvre du cycle de la figure 4 ;
- la figure 6 est une vue schématique d'une installation de production d'hydrogène, comportant une unité de mise en oeuvre d'un cycle selon l'invention ;
- la figure 7 est une vue schématique d'une installation de production combinée d'hydrogène et de monoxyde de carbone, comportant une unité de mise en oeuvre d'un cycle selon invention ;
- la figure 8 est une vue schématique d'une installation d'hydrodésulfuration d'hydrocarbures, comportant une unité de production d'hydrogène de mise en oeuvre d'un cycle selon l'invention;
- la figure 9 est une vue analogue à la figure 1, d'une variante de l'unité selon l'invention; et

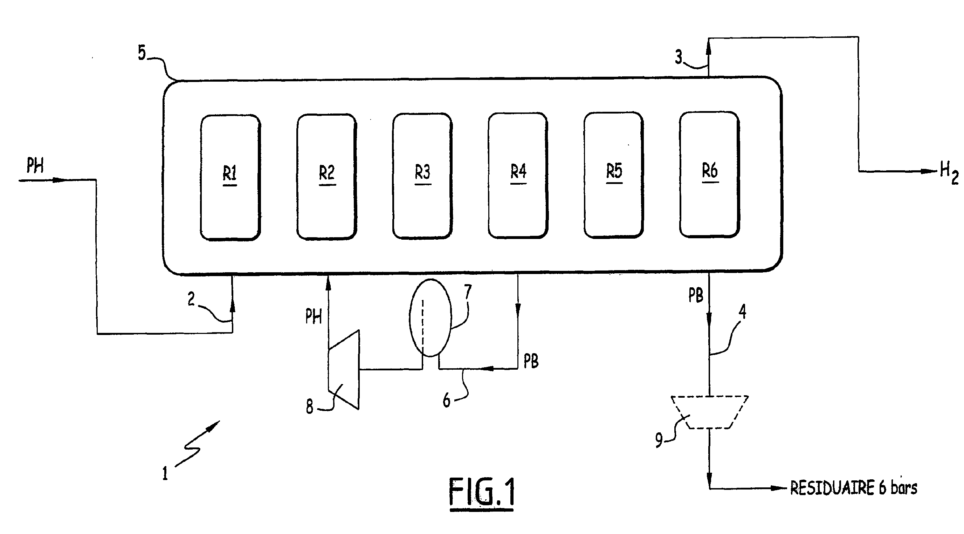

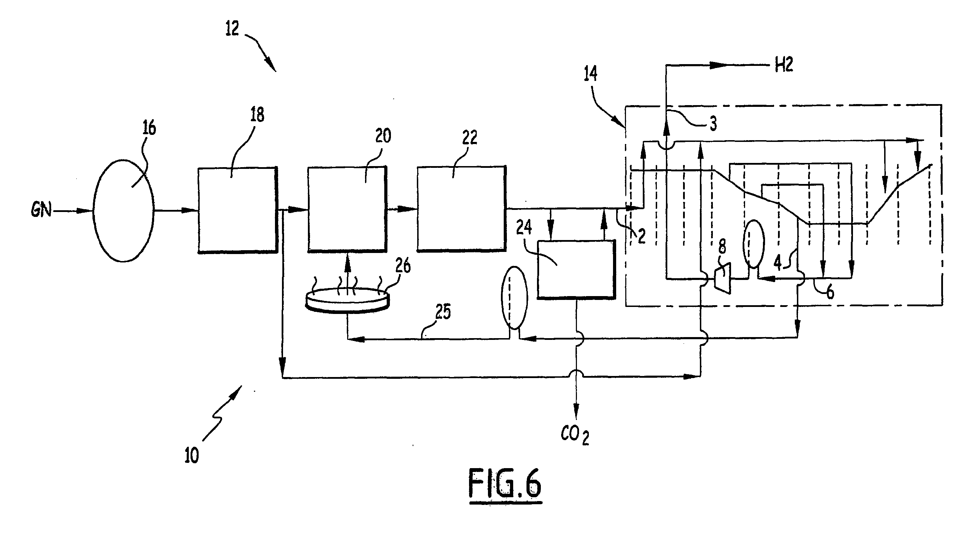

Sur la figure 1 est représentée une unité 1 de production d'hydrogène à partir d'un gaz riche en hydrogène, par exemple implantée dans une raffinerie pétrolière. A titre d'exemple, ce gaz d'alimentation contient 75% en volume d'hydrogène et des impuretés, à savoir 11 % de méthane, 7% d'éthane, 4% de propane, 2,9% de butane et 0,1% de sulfure d'hydrogène (H₂S). Un tel gaz d'alimentation est issu d'une unité de reformage catalytique et est disponible sous une pression de 26 bars environ. Divers exemples de natures de ce gaz seront développés plus loin, notamment en regard des figures 6 à 8.

L'unité 1 est adaptée pour produire, à partir du gaz d'alimentation acheminé par une ligne 2, un flux d'hydrogène de haute pureté (de teneur en hydrogène supérieure à 99 % en volume) via une ligne de production 3, tout en évacuant un flux de gaz résiduaire par une ligne d'évacuation 4 destinée à être raccordée à un réseau d'évacuation sous 6 bars environ, couramment implanté dans les raffineries pétrolières.

L'unité 1 comporte un appareil 5 d'épuration par adsorption, pourvu d'une ligne de recyclage 6. Cette ligne de recyclage est dotée, d'amont en aval, d'une capacité de mélange 7 et d'un appareil de compression 8, par exemple un compresseur.

En référence à l'art antérieur, l'unité 1 comporte un compresseur optionnel 9, tracé en pointillés, sur la ligne de résiduaire 4. Ce compresseur 9 est typiquement dédié à amener à la pression d'environ 6 bars du réseau d'évacuation le flux véhiculé par la ligne 4 si ce dernier est à une pression insuffisante. Un des aspects de l'invention est de supprimer ce compresseur 9, au profit du compresseur 8, comme il va être expliqué ci-dessous.

L'appareil d'épuration 5 comporte six adsorbeurs R1 à R6, comportant chacun un matériau adsorbant adapté pour fixer par adsorption les impuretés (les hydrocarbures et le sulfure d'hydrogène) contenues dans le mélange d'alimentation. Différents types de matériaux adsorbants sont envisageables, tels que des charbons activés, des gels de silice et/ou du tamis moléculaire.

L'appareil d'épuration 5 est de type P.S.A. Il comporte à cet effet des conduites, des vannes et des moyens de commande non représentés, adaptés pour faire suivre à chaque adsorbeur R1 à R6 un cycle de période T, qui est constitué de six temps de phase de sensiblement même durée, et dont un premier exemple est représenté sur la figure 2. En considérant que le cycle représenté s'applique depuis l'instant t = 0 à t = T à l'adsorbeur R6, le fonctionnement de l'adsorbeur R5 s'en déduit par décalage dans le temps de T/6, celui de l'adsorbeur R4 par décalage dans le temps de 2T/6 et ainsi de suite jusqu'à celui de l'adsorbeur R1 obtenu par décalage dans le temps de 5T/6. Par dualité temps de phase/adsorbeur, cela revient à considérer que, sur la figure 2, l'adsorbeur R6 suit le premier temps de phase représenté entre les instants t = 0 et t = T/6, l'adsorbeur R5 suit le deuxième temps de phase représenté entre les instants t = T/6 et t = 2T/6, et ainsi de suite jusqu'à l'adsorbeur R1 qui suit le sixième temps de phase représenté entre les instants t = 5T/6 et t = T.

Le gaz d'alimentation secondaire véhiculé par la ligne 6 est plus pauvre en hydrogène que le gaz d'alimentation principal véhiculé par la ligne 2, et ces deux gaz d'alimentation forment une dissymétrie, en terme de teneur en hydrogène, pour l'alimentation successive de chaque adsorbeur en phase d'adsorption. Cette dissymétrie permet d'atteindre une productivité plus élevée que celle d'un appareil PSA à flux d'alimentation unique. De plus, ce gain est d'autant plus élevé que le flux recyclé, issu d'adsorbeurs de l'appareil 5, est important du fait d'une augmentation de cette dissymétrie par baisse de la teneur en hydrogène du second gaz d'alimentation. Ainsi, au lieu d'avoir dans le cas de l'art antérieur une détérioration de la productivité lorsqu'on augmente la quantité de gaz de recycle pour augmenter le rendement hydrogène d'un appareil PSA, on observe un maintien de cette productivité.

On va maintenant décrire un autre aspect de l'invention, en se référant toujours aux éléments de l'unité représentée sur la figure 1, mais en considérant que cette unité suit divers cycles de fonctionnement détaillés au fur et à mesure, certains de ces cycles relevant de l'art antérieur et d'autres selon l'invention.

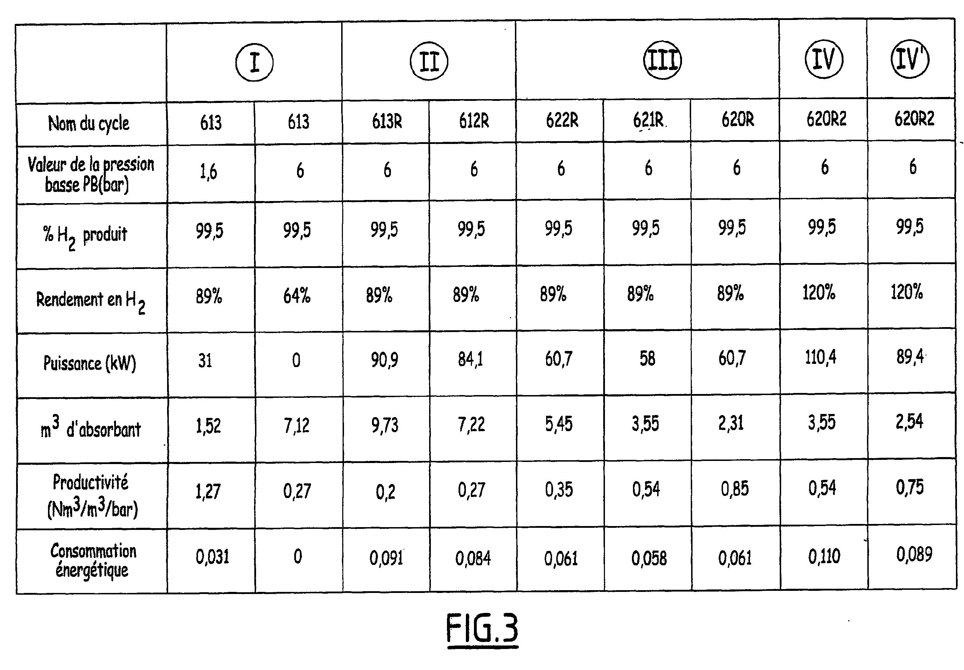

A cet effet, sur la figure 3 sont regroupés les résultats de fonctionnement d'unités PSA, sans ou avec recyclage de flux issus d'adsorbeurs en régénération, ce flux de recyclage étant mélangé ou dissocié du flux d'alimentation principal, comme il sera détaillé au fur et à mesure de la description ci-dessous. Les unités considérées fonctionnent avec le mélange d'alimentation de composition détaillée plus haut, produisent toutes un flux d'hydrogène sensiblement pur (de teneur en hydrogène d'environ 99,5% en volume) avec un débit de production de l'ordre de 1 000 Nm³/h (normaux-mètres cubes par heure). Leur pression basse PB de régénération est indiquée dans le tableau, selon que ces unités suivent un cycle à basse pression PB de 1,6 ou de 6 bars, comme expliqué précédemment.

Dans le tableau de la figure 3, sont successivement indiqués :
- la teneur en % volumique en hydrogène du flux de production de l'unité PSA considérée ;
- le rendement haute pression d'extraction en hydrogène, c'est-à-dire la quantité d'hydrogène contenue dans le flux de production sur la quantité d'hydrogène contenue dans le gaz d'alimentation principal (ligne 2) ;
- la puissance de compression, en kW, nécessaire au fonctionnement de l'unité PSA considérée ;
- le volume d'adsorbant, en m³, par adsorbeur nécessaire au fonctionnement de l'unité PSA considérée ;
- la productivité, en Nm³/m³/bar, qui correspond au nombre de normaux-mètres cubes réels d'hydrogène produit par mètre cube d'adsorbant utilisé ; et
- la consommation énergétique, en kW/(Nm³/h), qui correspond à la puissance de compression par normal-mètre cube par heure de gaz produit.

La colonne I du tableau de la figure 3 correspond à une unité PSA standard non représentée à six adsorbeurs qui suivent un cycle connu sans recyclage (cette unité PSA ne comporte donc pas de compresseur de recycle comme le compresseur 8 pour l'unité 1 de la figure 1), délicat à mettre en oeuvre en raison de sa complexité, mais reconnu pour ses bonnes performances. C'est par exemple le cas pour un cycle couramment appelé « cycle 613 », avec un adsorbeur en phase d'adsorption et trois équilibrages totaux de pression entre des adsorbeurs en dépressurisation à co-courant et des adsorbeurs en repressurisation. Dans le cas d'un cycle à basse pression PB de 1,6 bars, un compresseur placé en sortie de la ligne de résiduaire, comme le compresseur 9 pour l'unité 1, est nécessaire.

La colonne Il correspond à l'unité 1 de la figure 1 qui suit des cycles PSA pour lesquels le compresseur de recycle 8 renvoie un gaz de recycle haute pression PH qui est mélangé à la charge principale de la ligne 2 avant envoi dans l'adsorbeur. Ces cycles nommés 613R et 612R (« R » pour recyclage) correspondent à un cycle sur six adsorbeurs avec un adsorbeur en phase d'adsorption et avec respectivement trois et deux équilibrages totaux en pression entre des adsorbeurs en dépressurisation à co-courant et des adsorbeurs en repressurisation.

A la lecture individuelle des deux exemples de la colonne I, on constate que pour une faible pression basse PB, le rendement en hydrogène et la productivité sont bien plus élevés que ceux pour une pression basse PB plus forte, Il est en effet bien connu que l'épuration d'hydrogène par adsorption est favorisée par un fort différentiel PH/PB sur le cycle de l'unité PSA et qu'une valeur forte de la basse pression est très défavorable pour les cycles standards.

En revanche, par comparaison des colonnes I et II, fonctionner avec un cycle à pression basse PB égale à celle du réseau d'évacuation (6 bars) permet de se passer du compresseur 9, ce dernier étant remplacé par le compresseur de recycle 8. Ce compresseur 8 permet de retrouver de bons rendements en hydrogène, tout en limitant la consommation énergétique de ce compresseur qui pressurise un gaz à la haute pression PH à partir de déjà 6 bars environ. La comparaison des cycles nommés 613 à 6 bars et 613R de la colonne II permet en effet de passer de 64 à 89% de rendement HP au prix de l'achat d'un compresseur et d'une perte en productivité.

On remarque de plus que pour le cycle nommé 612R, on retrouve la productivité de 0.27 Nm³/m³/bar pour un rendement en hydrogène maintenu à 89%, tout en réduisant aussi la puissance du compresseur 8.

A titre de comparaison, sont reportées dans la colonne III du tableau de la figure 3 les performances de l'unité PSA 5 de la figure 1 qui suit :
- soit un cycle avec r = 2 (deux équilibrages totaux de pression), nommé 622R.

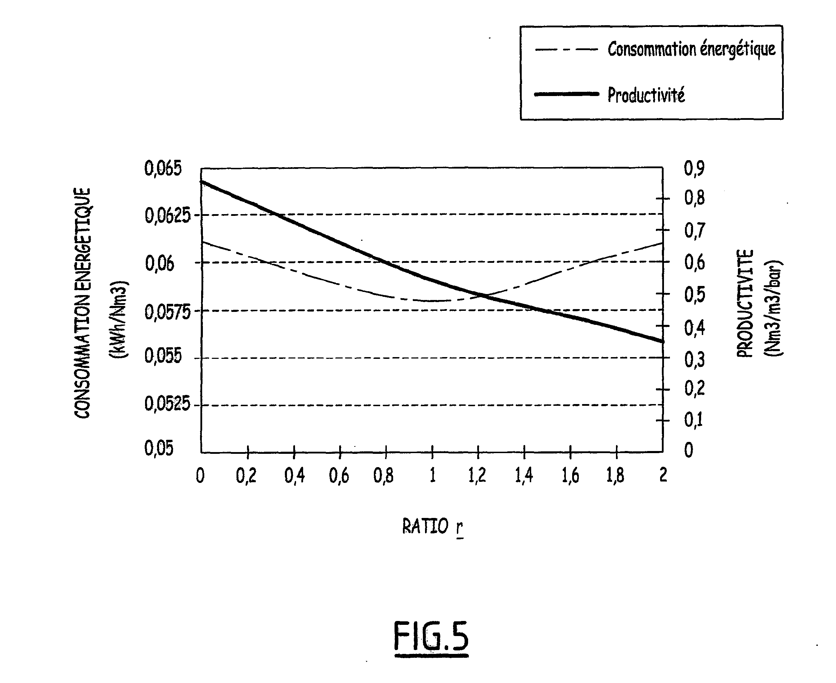

De plus, sur la figure 5 est représentée l'influence du ratio r sur la consommation énergétique et sur la productivité de l'unité PSA 5, à rendement constant et à pureté en hydrogène du flux de production constante. On remarque que plus le ratio r est proche de 0, plus la productivité de l'unité PSA augmente, sans augmentation significative de la consommation (inférieure à 5%). Ceci est confirmé à la fois par les exemples de la colonne Il et de la colonne III de la figure 3.

On comprendra que l'exemple développé ci-dessus ne limite pas l'invention à l'amélioration d'un cycle à un équilibrage total en pression (figure 2) par passage à un cycle à équilibrage partiel ou « nul ». Dans le cas d'un cycle plus complexe, à trois équilibrages totaux par exemple, il est envisageable, sans sortir du cadre de l'invention, d'aménager ce cycle en remplaçant un ou plusieurs de ces équilibrages totaux au profit d'équilibrages partiels, voire en supprimant un ou plusieurs de ces équilibrages totaux. On dispose alors d'un volume de gaz de régénération très important, assurant une excellente élution du matériau adsorbant et formant, au moins en partie, un flux de recyclage riche en hydrogène.

Sur les figures 6 à 8 sont représentés plusieurs exemples d'installations incorporant une unité de production d'hydrogène analogue à l'unité de la figure 1. Ces différentes applications vont être décrites ci-dessous à titre d'exemples non limitatifs des domaines de mise en oeuvre du procédé selon l'invention.

Sur la figure 6 est représentée une installation 10 de production d'hydrogène à partir d'un gaz de charge constitué de gaz naturel GN. L'installation comporte une ligne 12 de traitement du gaz naturel, à la sortie de laquelle est raccordée une unité PSA 14 de production d'hydrogène. Cette unité 14 est analogue à l'unité 1 de la figure 1 : d'une part, elle comporte les mêmes éléments désignés par les mêmes références, à la différence que son appareil d'épuration par adsorption comporte dix absorbeurs et non six, et, d'autre part, elle fonctionne sensiblement de la même façon, à la différence qu'elle suit un cycle à dix temps de phase, qui sera détaillé plus loin.

La ligne de traitement 12 comporte, d'amont en aval :
- une unité 16 de désulfuration adaptée pour abaisser la teneur en soufre du gaz de charge, par évacuation de sulfure d'hydrogène (H₂S) ;
- une unité 18 de préreformage adaptée pour décomposer les CₙHₘ en méthane et en dioxyde de carbone ;
- une unité 20 de reformage à la vapeur adaptée pour convertir de façon catalytique le méthane du gaz de charge en gaz de synthèse riche en hydrogène (entre 70 et 75 % en volume) et contenant du monoxyde de carbone (environ 10 %) et du dioxyde de carbone (entre 10 et 15 %) ;
- une unité 22 de conversion, par exemple à la vapeur d'eau, du monoxyde de carbone en dioxyde de carbone ; et
- une unité 24 de lavage aux amines pour abaisser fortement la teneur en dioxyde de carbone du gaz de charge, en produisant un flux de dioxyde de carbone valorisable.

En variante, l'unité 24 peut être remplacée par une unité à membranes sélectives qui favorise la perméation du dioxyde de carbone par rapport à l'hydrogène.

La phase d'adsorption du cycle de fonctionnement de l'unité PSA 14 s'étend sur trois temps de phase et comporte successivement une première étape de traitement du gaz de synthèse en sortie de la ligne 12, une deuxième étape de traitement du gaz de recyclage en sortie de la ligne de recyclage 6 de l'unité 14, et une troisième étape optionnelle de traitement d'une partie du gaz naturel préreformé soutiré en sortie de l'unité de préreformage 18. La teneur en hydrogène de ces trois gaz d'alimentation successifs est décroissante, la teneur en dioxyde de carbone de ces trois gaz étant au contraire croissante. On retrouve donc ici un effet de dissymétrie, en terme de teneur en hydrogène, pour les gaz d'alimentation de l'unité PSA, avec les avantages sur la production en hydrogène mentionnés précédemment.

La phase de régénération du cycle de l'unité PSA 14 s'étend sur sept temps de phase et comporte successivement :
- une sous-étape de dépressurisation à co-courant (sur deux temps de phase) sans équilibrage de pression ;
- une sous-étape de dépressurisation à contre courant (sur un temps de phase) durant laquelle le flux de résiduaire formé dans la ligne 4 est envoyé, via une ligne 25, à des brûleurs 26 chargés d'apporter de la chaleur à la réaction endothermique de reformage à la vapeur de l'unité de reformage 20 ;
- une étape d'élution vers recyclage (sur deux temps de phase) durant laquelle le matériau adsorbant est fortement purgé par les flux issus des adsorbeurs en sous-étape de dépressurisation co-courant décrite ci-dessus, en formant un flux de recyclage basse pression qui alimente la ligne 6 ; et
- une étape de repressurisation (sur deux temps de phase).

Le gaz résiduaire de la ligne 4 étant destiné à fournir l'énergie de combustion des brûleurs 26, son pouvoir calorifique est dimensionné pour ne pas dépasser les besoins des brûleurs. Le cycle de l'unité 14 permet d'optimiser la répartition des flux sortant de l'unité 14 en phase de régénération : une partie de ces flux, celle qui forme le résiduaire pauvre en hydrogène, est valorisée au plus juste dans les brûleurs 26, et la partie restante, celle qui est la plus riche en hydrogène, est recyclée à l'alimentation de l'unité PSA dont les performances (rendement en hydrogène, productivité, etc.) sont accrues, comme expliqué précédemment.

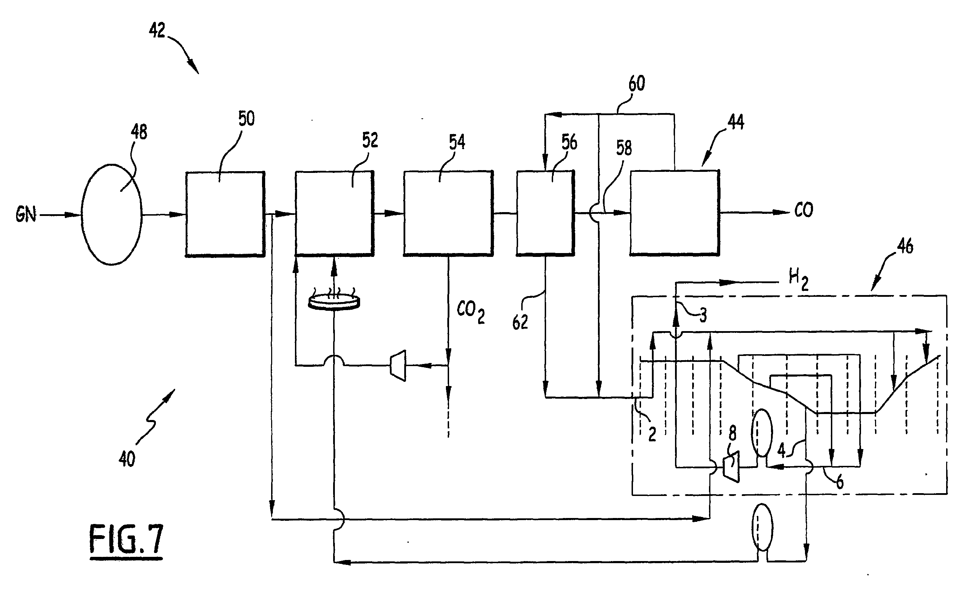

Sur la figure 7 est représentée une installation 40 de production combinée d'hydrogène et de monoxyde de carbone à partir d'un gaz de charge constitué de gaz naturel GN. L'installation comporte une ligne 42 de traitement du gaz naturel, en aval de laquelle sont raccordées à la fois une unité cryogénique 44 de production de monoxyde de carbone (CO) et une unité PSA 46 de production d'hydrogène dont le cycle ne comporte pas d'équilibrage de pression. Cette unité 46 est identique à l'unité 14 de l'installation 10 et ne sera pas détaillée plus avant.

La ligne de traitement 42 comporte, d'amont en aval :
- une unité 48 de désulfuration adaptée pour abaisser la teneur en soufre de gaz de charge ;
- une unité 50 de préreformage adaptée pour décomposer les CₙHₘ en méthane et dioxyde de carbone ;
- une unité 52 de reformage à la vapeur adaptée pour convertir de façon catalytique le méthane du gaz de charge en gaz de synthèse riche en hydrogène et contenant du monoxyde de carbone et du dioxyde de carbone ;
- une unité 54 de lavage aux amines dont le flux résiduel riche en dioxyde de carbone est, au moins en partie, comprimé pour être recyclé à l'entrée de l'unité de reformage 52 ; et
- une unité 56 de dessication permettant d'arrêter l'eau et d'abaisser la teneur en dioxyde de carbone à environ une ppm (partie-par-million).

Une première sortie 58 de l'unité de dessication 56 est raccordée à l'unité cryogénique 44, qui comporte une ligne 60 de retour à l'unité de dessication.

Une deuxième sortie 62 de l'unité de dessication 56 est raccordée à l'unité PSA 46 de façon à former, avec une partie du flux de la ligne de retour 60, le premier mélange d'alimentation utilisé par cette unité.

Le deuxième mélange d'alimentation est soutiré de la ligne de recyclage 6 de l'unité 46.

Le troisième mélange d'alimentation, optionnel, est formé de la même façon que pour l'installation 10 de la figure 6, à savoir par une partie du gaz naturel préreformé, soutirée en sortie de l'unité de préreformage 50.

L'installation 40 assure à la fois un bon rendement en hydrogène (pour les mêmes raisons que celles développées en regard de la figure 6) et un bon rendement en monoxyde de carbone, accompagnés d'une production de gaz résiduaire en sortie de l'unité PSA 46 riche en méthane, pouvant être employé comme gaz combustible de brûleurs pour l'unité de reformage 52. En variante non représentée, le gaz résiduaire peut être en partie recyclé dans le flux de charge de l'unité de reformage 52 en profitant du compresseur de recyclage du dioxyde de carbone.

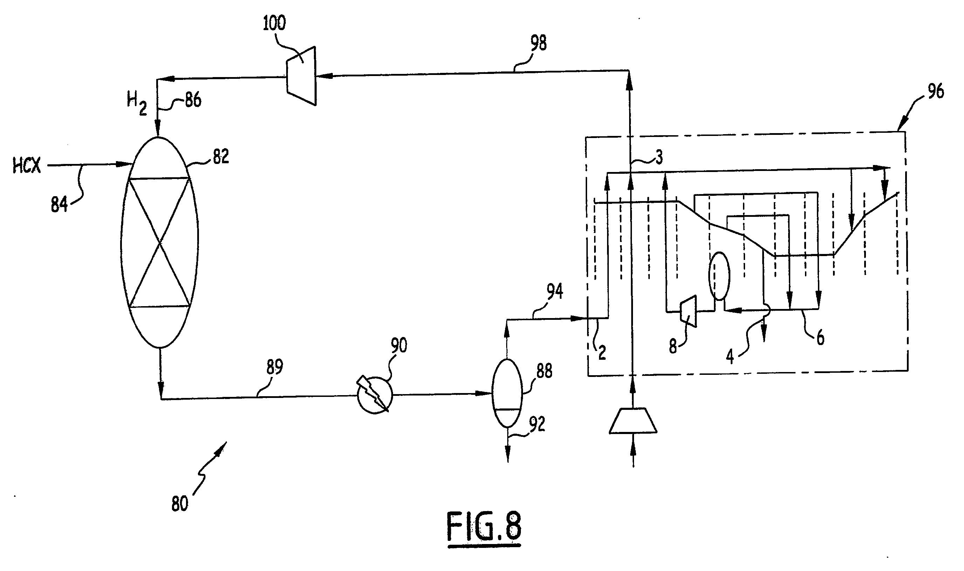

Sur la figure 8 est représentée une installation 80 de reformage d'hydrocarbures lourds HCX, par exemple de pétrole brut, l'installation 80 faisant partie d'une raffinerie pétrolière. Cette installation a pour but d'hydrogéner et de désulfurer une charge de pétrole brut afin de produire un carburant pétrolier prêt à l'usage, par exemple du gazole.

Ce type d'installation est très consommatrice d'hydrogène, qui est à la base de la majorité des réactions chimiques mises en oeuvre. Ces réactions catalysées sont d'ailleurs d'autant plus efficaces que la pression partielle en hydrogène consommé est forte, d'où l'utilisation de flux d'hydrogène à des puretés supérieures à 99 %. Des moyens classiques d'épuration de l'hydrogène, tels qu'une unité PSA standard, sont envisageables, mais restent économiquement non rentables en raison de fortes pertes en hydrogène engendrées par ces réactions en cycle fermé.

Le procédé de production d'hydrogène proposé en regard des figures 1, 2 et 4 est ici directement applicable au traitement de ces charges d'hydrocarbures lourds, plus ou moins riches en hydrogène, le rendement en hydrogène du procédé selon l'invention étant à même de dépasser les limitations en rendement des unités PSA standards.

L'installation 80 comporte à cet effet :
- un réacteur d'hydrodésulfuration 82 raccordé à une ligne de charge 84 et une ligne 86 d'alimentation en hydrogène ;
- un pot séparateur 88 raccordé au réacteur 82 par une ligne 89 pourvue d'un refroidisseur 90 ;
- une ligne 92 de production de produit liquide, telle que du gazole, en cuve du pot séparateur 88 ;
- une ligne 94 de soutirage en tête du pot 88, raccordée à une unité PSA 96 sensiblement analogue à l'unité PSA 14 de l'installation 10 de la figure 6 ; et
- une ligne 98 de renvoi d'hydrogène au réacteur 82, qui relie la sortie de production en hydrogène de l'unité PSA 96 à la ligne d'alimentation en hydrogène 86, et qui est pourvue d'un compresseur 100 permettant de compenser les pertes de charge et d'assurer un recyclage de la phase gazeuse riche en hydrogène.

Le cycle de fonctionnement de l'unité PSA 96 est très proche de celui de l'unité 14 de la figure 6. La phase d'adsorption comporte successivement une première étape de traitement d'un premier gaz d'alimentation en sortie de la ligne 94, une deuxième étape de traitement d'un deuxième gaz d'alimentation formé d'un gaz d'appoint comprimé, par exemple issu d'une unité de reformage catalytique non représentée, et d'une troisième étape de traitement d'un troisième gaz d'alimentation en sortie de la ligne de recyclage 6. La phase de régénération, sans équilibrage en pression, est sensiblement identique à celle du cycle de l'unité 14 de la figure 6, le flux de résiduaire de la ligne 4 (formé de sulfure d'hydrogène, d'hydrocarbures et de traces d'hydrogène) étant par exemple envoyé à un réseau de gaz combustible, valorisable au sein de la raffinerie.

A titre d'exemple, ce cycle « en boucle fermée sur le réacteur 82 » fonctionne avec un débit de 40 000 Nm³/h d'un flux d'hydrogène pur à 95 % en volume sur la ligne d'alimentation principale 94 de l'unité PSA, et avec un débit de 8 000 Nm³/h de gaz d'appoint de teneur en hydrogène égal à environ 75 % en volume, pour un gaz de recyclage en 6 de teneur en hydrogène égal à environ 45 % en volume.

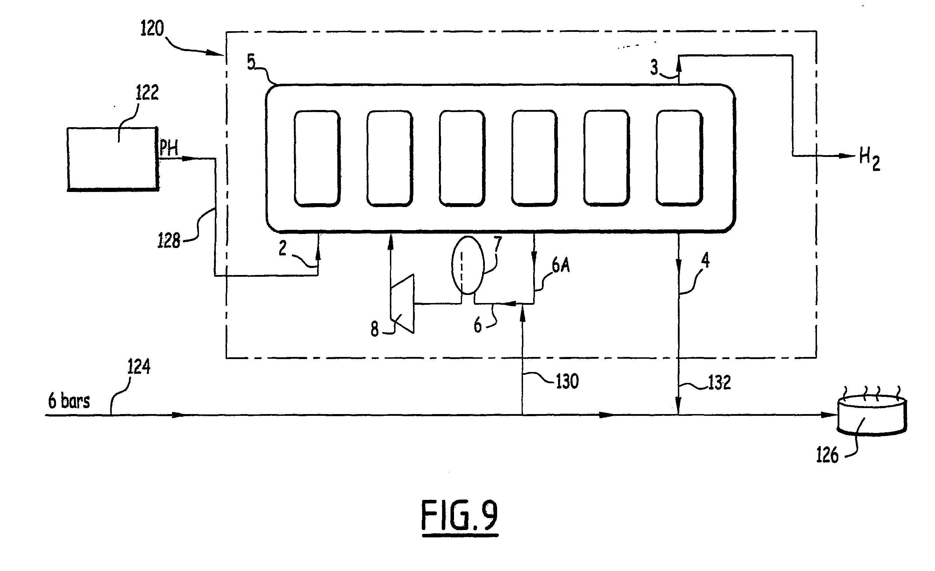

Sur la figure 9 est représentée une unité 120 de production d'hydrogène, variante de l'unité 1 de la figure 1. Les éléments communs à ces deux unités portent les mêmes références et ne seront pas détaillés de nouveau.

L'unité 120 est associée à une source haute pression de gaz de synthèse et à un réseau 124 de gaz combustible, pourvu en extrémité aval de brûleurs 126. Dans le cadre d'une raffinerie pétrolière, la source haute pression est par exemple un reformeur catalytique, et le réseau 124 est le réseau dit de « fuel gaz » qui collecte, typiquement sous environ 6 bars, des gaz résiduels évacués d'unités de reformage et de traitements chimiques couramment implantées dans la raffinerie, et à partir desquels les brûleurs 126 produisent une chaleur, valorisée dans la raffinerie.

A titre d'exemple, le flux de gaz de synthèse en sortie de l'unité de reformage catalytique 122 est à la pression de 26 bars, présente une teneur en hydrogène de 75% en volume et possède un débit de l'ordre de 1 100 Nm³/h. Le réseau de gaz combustible 124 sous environ 6 bars, présente une teneur en hydrogène comprise entre 30 et 60 %, pour un débit d'environ 4 000 Nm³/h.Un exemple de composition du flux du réseau 124 est : 50,3% d'hydrogène, 14,5% de méthane, 25,2% d'éthane, 7,8% de butane, 2,1% de propane et 0,1% de sulfure d'hydrogène.

L'unité 120 est alimentée en charge de la source 122 par une conduite 128 délivrant, dans notre exemple, environ 1100 Nm³/h de débit. Elle est de plus raccordée au réseau moyenne pression 124 : d'une part, une partie du gaz combustible est envoyée, via une dérivation 130, à la ligne de recyclage 6, la partie amont de la ligne 6 (c'est-à-dire la partie collectant les flux recyclés issus des adsorbeurs en phase de régénération) étant notée 6A ; d'autre part, la sortie de la ligne de résiduaire 4 est raccordée par une ligne d'évacuation 132 au réseau de gaz combustible, en aval de la dérivation 130.

Le cycle de fonctionnement de l'unité PSA 120 est représenté par la figure 9, avec les mêmes conventions de notation que le cycle de la figure 4, sa pression basse PB valant environ 6 bars. Il est identique au cycle de la figure 4, à la différence du raccordement de la dérivation 130 à la ligne de recyclage 6. Le point de raccordement de la dérivation 130 à la ligne 6 est, comme représenté sur la figure 9, situé en amont de la capacité de mélange 7.

En variante, une source haute pression de gaz combustible peut être directement mélangée au refoulement du compresseur 8.

Le renforcement du gaz de recyclage par une partie du gaz combustible, disponible sur la raffinerie, augmente notablement la production en hydrogène de l'unité 120, dont les performances sont reportées dans la colonne IV du tableau de la figure 3. Le rendement de cette unité 120 indiqué à 120% s'explique par la valorisation de l'hydrogène du réseau de combustible 124, le rendement calculé dans le tableau étant le rapport entre la quantité d'hydrogène produite en 3 sur la quantité d'hydrogène introduite en 2. Le rendement global en hydrogène (quantité d'hydrogène apportée/quantité d'hydrogène soutirée en production) vaut 89%. A titre d'exemple, pour la composition du flux de gaz combustible détaillée ci-dessus, le bilan matière (en % volumique) de l'installation de la figure 9 est le suivant :

| | Gaz de la conduite 128 | Gaz de la ligne 6 | Gaz de la conduite 130 | Gaz de la conduite 132 | Gaz de la ligne 3 | Gaz de la partie de ligne 6A |
|---|---|---|---|---|---|---|
| Hydrogène | 75% | 44,5% | 50,3% | 19,2% | 99,5% | 41,1% |
| Méthane | 11% | 24,3% | 14,5% | 29,3% | 0,5% | 29,9% |
| Ethane | 7% | 20,4% | 25,2% | 32,2% | 0,0% | 17,6% |
| Butane | 4% | 7,6% | 7,8% | 12,9% | 0,0% | 7,4% |
| Propane | 3% | 3,2% | 2,1% | 6,3% | 0,0% | 3.9% |
| Sulfure d'hydrogène | 0,1% | 0,1% | 0,1% | 0,2% | 0,0% | 0,1% |
| Total | 100,0% | 100,0% | 100,0% | 100,0% | 100,0% | 100,0% |
| Pression (bar) | 26 | 26 | 6 | 6 | 25 | 6 |
| Débit (Nm³/h) | 1103 | 1594 | 585 | 711 | 1000 | 1009 |

Dans le cas où l'on cherche une consommation énergétique plus faible, il est possible de réduire la part de gaz de recycle issus des adsorbeurs en régénération (flux de la partie de ligne 6A) et donc de réduire la puissance de compression nécessaire, le rendement global en hydrogène s'en trouvant abaissé de 89 à 76%. Un tel cas de figure correspond à la colonne IV' du tableau de la figure 3. Le bilan matière correspondant est le suivant :

| | Gaz de la conduite 128 | Gaz de la ligne 6 | Gaz de la conduite 130 | Gaz de la conduite 132 | Gaz de la ligne 3 | Gaz de la partie de ligne 6A |
|---|---|---|---|---|---|---|
| Hydrogène | 75% | 50,3% | 50,3% | 29.8% | 99,5% | 50,2% |
| Méthane | 11% | 16,7 | 14,5% | 24,1% | 0,5% | 23,3% |
| Ethane | 7% | 23,0 | 25,2% | 29,9% | 0,0% | 16,6% |
| Butane | 4% | 7,5% | 7,8% | 11,2% | 0,0% | 6,7% |
| Propane | 3% | 2,3% | 2,1% | 4,9% | 0,0% | 3,1% |
| Sulfure d'hydrogène | 0,1% | 0,1% | 0,1% | 0,2% | 0,0% | 0,1% |
| Total | 100,0% | 100,0% | 100,0% | 100,0% | 100,0% | 100,0% |
| Pression (bar) | 26 | 26 | 6 | 6 | 25 | 6 |
| Débit (Nm³/h) | 1106 | 1277 | 955 | 1066 | 1000 | 322 |

Divers aménagements de l'unité PSA selon l'invention sont à la portée de l'homme de métier sans sortir du cadre de l'invention. Ainsi, dans le cas d'appareils PSA à nombre réduit d'adsorbeurs, voire à un seul adsorbeur, une ou plusieurs capacités tampons peuvent être prévues de façon à permettre le stockage temporaire et l'utilisation différée dans le temps de flux sortant du ou des adsorbeurs.

## Revendications

1. Procédé de production d'hydrogène à partir d'un mélange d'alimentation principal riche en hydrogène, du type dans lequel on utilise N adsorbeurs, avec N supérieur ou égal à un, qui suivent chacun en décalage un cycle où se succèdent une phase d'adsorption sensiblement à une haute pression du cycle (PH) et une phase de régénération, laquelle phase de régénération comprend une étape de dépressurisation jusqu'à une pression basse du cycle (PB) comportant une sous-étape de dépressurisation à co-courant, une étape d'élution à la basse pression du cycle (PB), et une étape de repressurisation jusqu'à la haute pression du cycle (PH), **caractérisé en ce qu'**on envoie la totalité du ou des flux sortant du ou des adsorbeurs en dépressurisation à co-courant à l'adsorbeur ou aux adsorbeurs en étape d'élution, et **en ce qu'**on recycle au moins une partie du ou des flux sortant du ou des adsorbeurs en phase de régénération, en comprimant ladite partie recyclée jusqu'à la haute pression du cycle (PH) et en alimentant le ou les adsorbeurs en phase d'adsorption par ladite partie recyclée.

2. Procédé suivant la revendication 1, **caractérisé en ce que**, durant la phase d'adsorption, se succèdent une étape de traitement par adsorption, sensiblement à la haute pression du cycle (PH), du mélange d'alimentation principal, et une étape de traitement par adsorption, sensiblement à la même haute pression du cycle (PH), de la partie recyclée comprimée du ou des flux sortant du ou des adsorbeurs en phase de régénération.

3. Procédé suivant l'une quelconque des revendications précédentes, **caractérisé en que** l'étape de dépressurisation comporte, après la sous-étape de dépressurisation à co-courant, une sous-étape de dépressurisation à contre-courant, et ce qu'on recycle, au moins en partie, le ou les flux sortant du ou des adsorbeurs en début de sous-étape de dépressurisation à contre-courant.

4. Procédé suivant l'une quelconque des revendications précédentes, **caractérisé en ce qu'**on recycle, au moins en partie, le ou les flux sortant du ou des adsorbeurs en fin d'étape d'élution.

5. Procédé suivant les revendications 3 et 4 prises ensemble, **caractérisé en ce qu'**on recycle, au moins en partie, le ou les flux sortant du ou des adsorbeurs en dépressurisation à contre-courant pendant le premier tiers de la sous-étape de dépressurisation à contre-courant, et/ou le ou les flux sortant du ou des adsorbeurs en élution pendant les deux derniers tiers de l'étape d'élution.

6. Procédé suivant l'une quelconque des revendications 2 à 5, **caractérisé en ce que** la phase d'adsorption comprend, après l'étape de traitement du mélange d'alimentation, une étape de traitement par adsorption, à la haute pression du cycle (PH), d'au moins un gaz d'alimentation supplémentaire de teneur en hydrogène inférieure à celle dudit mélange d'alimentation, l'étape de traitement dudit gaz supplémentaire étant placée après l'étape de traitement de la partie recyclée du ou des flux sortant du ou des adsorbeurs en phase de régénération lorsque la teneur en hydrogène dudit gaz supplémentaire est inférieure à celle de ladite partie recyclée (figures 6 et 7), ou placée avant l'étape de traitement du second gaz d'alimentation lorsque la teneur en hydrogène dudit gaz supplémentaire est supérieure à celle de ladite partie recyclée (figure 8).

7. Procédé suivant l'une quelconque des revendications précédentes, **caractérisé en ce qu'**on mélange, à la partie recyclée du ou des flux sortant du ou des adsorbeurs en phase de régénération, un gaz combustible de teneur en hydrogène inférieure à celle du mélange d'alimentation.

## Claims

1. Method for producing hydrogen from a main hydrogen-rich feed mixture, of the type in which N adsorbers are used, with N being greater than or equal to one, each following with a time lag a cycle where there are, successively, an adsorption phase substantially at a high cycle pressure (HP) and a regeneration phase, this regeneration phase comprising a depressurization step to a low cycle pressure (LP) including a cocurrent depressurization substep, an elution step at the low cycle pressure (LP), and a repressurization step to the high cycle pressure (HP), **characterized in that** all the stream or streams leaving the adsorber or adsorbers during cocurrent depressurization are sent to the adsorber or adsorbers during the elution step, and **in that** at least one portion of the stream or streams leaving the adsorber or adsorbers in the regeneration phase is recycled, by compressing said recycled portion to the high cycle pressure (HP) and by feeding the adsorber or adsorbers in the adsorption phase with said recycled portion.

2. Method according to Claim 1, **characterized in that**, during the adsorption phase, there are, successively, a step, substantially at the high cycle pressure (HP), for treating by adsorption the main feed mixture, and a step, substantially at the same high cycle pressure (PH), for treating by adsorption the compressed recycled portion of the stream or streams leaving the adsorber or adsorbers in the regeneration phase.

3. Method according to either of the preceding claims, **characterized in that** the depressurization step includes, after the cocurrent depressurization substep, a countercurrent depressurization substep, and **in that** the stream or streams leaving the adsorber or adsorbers at the start of the countercurrent depressurization substep is or are at least partially recycled.

4. Method according to any one of the preceding claims, **characterized in that** the stream or streams leaving the adsorber or adsorbers at the end of the elution step is or are at least partially recycled.

5. Method according to Claims 3 and 4 taken together, **characterized in that** the stream or streams leaving the adsorber or adsorbers in countercurrent depressurization during the first third of the countercurrent depressurization substep, and/or the stream or streams leaving the adsorber or adsorbers in elution during the last two thirds of the elution step is or are at least partially recycled.

6. Method according to any one of Claims 2 to 5, **characterized in that** the adsorption phase comprises, after the step for treating the feed mixture, a step at the high cycle pressure (HP), for the treatment by adsorption of at least one supplementary feed gas with a hydrogen content lower than that of said feed mixture, the step for treating said supplementary gas being placed after the step for treating the recycled portion of the stream or streams leaving the adsorber or adsorbers in the regeneration phase when the hydrogen content of said supplementary gas is below that of said recycled portion (figure 6 and 7), or placed before the step for treating the second feed gas when the hydrogen content of said supplementary gas is above that of said recycled portion (figure 8).

7. Method according to any one of the preceding claims, **characterized in that** a fuel gas with a hydrogen content below that of the feed mixture is mixed with the recycled portion of the stream or streams leaving the adsorber or adsorbers in the regeneration phase.

## Patentansprüche

1. Verfahren zur Produktion von Wasserstoff aus einem wasserstoffreichen Haupteinsatzgemisch des Typs, bei dem man N Adsorber verwendet, wobei N größer gleich eins ist, die jeweils zeitversetzt einem Zyklus folgen, bei dem eine Adsorptionsphase weitgehend bei hohem Zyklusdruck (PH) und eine Regenerationsphase aufeinander folgen, wobei die Regenerationsphase einen Schritt der Entspannung auf einen niedrigen Zyklusdruck (PB) mit einem Unterschritt der Gleichstrom-Entspannung, einen Schritt der Elution bei dem niedrigen Zyklusdruck (PB) und einen Schritt der erneuten Druckbeaufschlagung bis zu dem hohen Zyklusdruck (PH) umfaßt, **dadurch gekennzeichnet, daß** man den oder die aus dem oder den Adsorbern unter Gleichstrom-Entspannung austretenden Ströme vollständig dem oder den Adsorbern im Elutionsschritt zuführt und mindestens einen Teil des oder der aus den Adsorbern in der Regenerationsphase austretenden Ströme rezykliert, indem man den rezyklierten Teil auf den hohen Zyklusdruck (PH) verdichtet und den rezyklierten Teil dem oder den Adsorbern in der Adsorptionsphase zuführt.

2. Verfahren nach Anspruch 1, **dadurch gekennzeichnet, daß** während der Adsorptionsphase ein Schritt der weitgehend bei dem hohen Zyklusdruck (PH) erfolgenden Adsorptionsbehandlung des Haupteinsatzgemischs, und ein Schritt der weitgehend bei dem gleichen hohen Zyklusdruck (PH) erfolgenden Adsorptionsbehandlung des verdichteten rezyklierten Teils des oder der aus dem oder den Adsorbern in der Regenerationsphase austretenden Ströme aufeinander folgen.

3. Verfahren nach einem der vorhergehenden Ansprüche, **dadurch gekennzeichnet, daß** der Entspannungsschritt nach dem Unterschritt der Gleichstrom-Entspannung einen Unterschritt der Gegenstrom-Entspannung enthält und man den oder die aus dem oder den Adsorbern am Beginn des Unterschritts der Gegenstrom-Entspannung austretenden Ströme zumindest teilweise rezykliert.

4. Verfahren nach einem der vorhergehenden Ansprüche, **dadurch gekennzeichnet, daß** man den oder die aus dem oder den Adsorbern am Ende des Elutionsschritts austretenden Ströme zumindest teilweise rezykliert.

5. Verfahren nach den Ansprüchen 3 und 4 zusammengenommen, **dadurch gekennzeichnet, daß** man den oder die aus dem oder den Adsorbern unter Gegenstrom-Entspannung während des ersten Drittels des Unterschritts der Gegenstrom-Entspannung austretenden Ströme und/oder den oder die aus dem oder den Adsorbern unter Elution während der letzten beiden Drittel des Elutionsschritts austretenden Ströme zumindest teilweise rezykliert.

6. Verfahren nach einem der Ansprüche 2 bis 5, **dadurch gekennzeichnet, daß** die Adsorptionsphase nach dem Schritt der Behandlung des Einsatzgemischs einen Schritt der bei dem hohen Zyklusdruck (PH) erfolgenden Adsorptionsbehandlung mindestens eines zusätzlichen Einsatzgases mit einem kleineren Wasserstoffgehalt als das Einsatzgemisch umfaßt, wobei der Schritt der Behandlung des zusätzlichen Gases nach dem Schritt der Behandlung des rezyklierten Teils des oder der aus dem oder den Adsorbern in der Regenerationsphase austretenden Ströme angeordnet wird, wenn der Wasserstoffgehalt des zusätzlichen Gases kleiner als derjenige des rezyklierten Teils ist (Figuren 6 und 7), oder vor dem Schritt der Behandlung des zweiten Einsatzgases angeordnet wird, wenn der Wasserstoffgehalt des zusätzlichen Gases größer als derjenige des rezyklierten Teils ist (Figur 8).

7. Verfahren nach einem der vorhergehenden Ansprüche, **dadurch gekennzeichnet, daß** man dem rezyklierten Teil des oder der aus dem oder den Adsorbern in der Regenerationsphase austretenden Ströme ein Brenngas mit einem kleineren Wasserstoffgehalt als das Einsatzgemisch beimischt.
